# FASCICULE DE BREVET EUROPEEN

(11) **EP 4 675 467 B1**
(45) Date de publication et mention de la délivrance du brevet: **30.09.2026**
(21) Numéro de dépôt: 25180920.8
(22) Date de dépôt: 05.06.2025
(51) Int. Cl.: G06F 21/32

(54) **PROCÉDÉ ET TERMINAL D'ENCODAGE BIOMÉTRIQUE**
VERFAHREN UND ENDGERÄT ZUR BIOMETRISCHEN CODIERUNG
BIOMETRIC ENCODING METHOD AND TERMINAL

(30) Priorité: 03.07.2024 FR 2407238
(43) Date de publication de la demande: 07.01.2026
(73) Titulaire: Idemia Public Security France, 92400 Courbevoie (FR)
(72) Inventeur: CHABANNE, Hervé, 92400 COURBEVOIE (FR); DESPIEGEL, Vincent, 92400 COURBEVOIE (FR)
(74) Mandataire: IPS

(56) Documents cités:
- FR-A1- 3 106 678
- JUAN M COLORES-VARGAS ET AL: "Video Images Fusion to Improve Iris Recognition Accuracy in Unconstrained Environments", 26 June 2013, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 114 - 125, ISBN: 978-3-540-74549-5, XP047031515

## Description

### Domaine technique

La présente invention concerne un procédé et un terminal d'encodage biométrique. Elle se rapporte également à un procédé et un système d'identification mettant en œuvre le procédé et le terminal d'encodage biométrique.

### Arrière-plan technique

Il est courant de recourir à des protocoles d'identification et/ou d'authentification des individus fondés sur la comparaison de certaines de leurs caractéristiques biométriques afin de leur permettre d'accéder à des services à distance, autoriser un accès à des informations stockées dans une base collective ou personnelle de données, vérifier une identité ou encore autoriser un accès à une zone d'accès restreint.

Que ce soit lors d'une authentification ou lors d'une identification, la comparaison des caractéristiques biométriques n'est généralement pas mise en œuvre sur les données brutes directement issues de leur enregistrement mais sur des données biométriques dérivées par suite de l'application d'un traitement algorithmique appelé encodage. Selon la section 3.21 de la norme ISO/IEC 19794-1:2011 Information technology - Biometric data interchange formats - Part 1: Framework, les données biométriques dérivées constituent un « gabarit biométrique » ou « modèle biométrique » qui est distinct des données brutes dont il est issu et peut être comparé à d'autres gabarits biométriques.

Une authentification biométrique consiste généralement à comparer un gabarit biométrique d'épreuve acquis pour un individu à un seul ou un nombre très limité de gabarits biométriques de référence (1:1). Ce type de protocole permet à d'un utilisateur qui souhaite accéder aux ressources d'un système d'information, tel qu'un système d'exploitation, un réseau, une application, un service, une base de données ou encore une application, de prouver son identité à l'aide d'une caractéristique biométrique. L'exploitation d'un protocole d'authentification requiert généralement une étape préalable d'enrôlement par lequel un utilisateur s'identifie en partageant un certain nombre d'informations relatives à son identité auprès de l'entité qui implémente le protocole.

Réaliser une opération bancaire à distance, accéder à une base de données de mots de passe enregistrée sur un téléphone mobile multifonction, ou vérifier, lors d'un passage aux frontières ou lors d'un contrôle par les forces de l'ordre, l'identité d'un individu porteur d'un document d'identité comprenant un élément électronique sécurisé sur lequel sont enregistrées des informations biométriques sont des exemples courant d'application d'un protocole d'authentification.

WO 9526013 A1 [MINNESOTA MINING & MFG [US]] 28.09.1995 décrit un système d'authentification par comparaison d'une caractéristique biométrique d'épreuve acquise auprès d'un individu avec une caractéristique biométrique de référence enregistré dans le système. Le système est outre en outre configuré pour détecter une caractéristique biométrique variable pour vérifier la vivacité (« liveness ») de l'individu.

A la différence de l'authentification, l'identification requiert la comparaison d'un gabarit biométrique d'épreuve avec de nombreux autres gabarits biométriques de référence préalablement acquis auprès de plusieurs individus (1:N) et généralement stockés dans une base de données. Ce type de protocole permet d'identifier un utilisateur parmi un ensemble d'utilisateurs. La base de données des gabarits biométriques de référence requiert généralement une étape préalable d'enregistrement de gabarits biométriques collectés auprès d'individus identifiés.

Déterminer, par exemple dans le cadre d'une enquête policière, l'identité d'une personne par comparaison d'un dactylogramme de ses dermatoglyphes, d'une image de son iris ou d'une image son visage avec ceux d'une base de données d'individus connus est une application courante d'un protocole d'identification. Un autre exemple d'application est l'accès à une zone d'accès restreint à un nombre limité d'individus.

US 4109237 A [HILL ROBERT B] 22.08.1978 décrit une méthode d'identification d'un individu par comparaison du motif du réseau veineux de son iris avec un ensemble de motifs de réseaux veineux préalablement enregistrés d'une pluralité d'individus.

Il est aujourd'hui courant pour les utilisateurs, lorsqu'ils souhaitent réaliser une opération avec une ressource distante, de s'authentifier et/ou s'identifier à l'aide d'un dispositif mobile, tel qu'un téléphone multifonction, une tablette ou un ordinateur portable, en communication avec cette ressource. Cependant, les données biométriques, qu'elles soient sous forme brutes ou de gabarits, sont des données à caractère personnel très sensibles. Il est nécessaire d'en assurer la confidentialité tout en les préservant du vol et/ou de l'usurpation d'identité.

EP 2 813 961 A1 [KONVALINKA IRA [CA]] 17.12.2014 décrit une méthode d'authentification biométrique mettant en œuvre un dispositif mobile couplé à un serveur distant. Le dispositif comprend un capteur biométrique et une mémoire sur laquelle est enregistrée un gabarait biométrique personnel de référence propre à son utilisateur. Sur requête du serveur, l'utilisateur procède à l'acquisition d'une caractéristique biométrique d'épreuve à l'aide du capteur biométrique du dispositif mobile. Ensuite, le dispositif génère un gabarit biométrique d'épreuve, le compare au gabarait biométrique personnel de référence et transmet un signal de succès ou d'échec au serveur distant. Lors de l'opération, les informations biométriques sont confinées sur le dispositif mobile et ne sont jamais communiquées au serveur. Leur confidentialité est préservée. En revanche, le serveur distant n'a aucune garantie sur l'identité réelle de l'utilisateur du dispositif mobile.

Il est possible de renforcer la sécurité des protocoles d'authentification ou d'identification, et notamment réduire le risque d'usurpation d'identité, en ayant recours à un terminal biométrique d'authentification ou d'identification couplé à un dispositif mobile. Le terminal est configuré pour acquérir des caractéristiques biométriques d'un individu et d'en générer un gabarit biométrique supplémentaire d'épreuve. Le gabarit biométrique supplémentaire d'épreuve peut ensuite être comparé à un gabarit biométrique de référence.

WO 2017/019972 A1 [VISA INT SERVICE ASS [US]] 02.02.2017 décrit une méthode d'authentification biométrique mettant en œuvre un dispositif mobile couplé à un terminal d'accès muni d'un capteur biométrique. Sur le dispositif mobile est enregistré un gabarait biométrique personnel de référence propre à son utilisateur. Le dispositif mobile est configuré pour recevoir un gabarit biométrique d'épreuve généré par le terminal d'accès, comparer ledit gabarit biométrique d'épreuve au gabarit biométrique personnel de référence, et envoyer le résultat de la comparaison au terminal d'accès.

WO 2017/075063 A1 [VISA INT SERVICE ASS [US]] 04.07.2017 décrit méthode permettant d'authentifier des individus à proximité d'un terminal d'accès biométrique à l'aide de leurs dispositifs mobiles sans que les individus n'aient à procéder à l'acquisition d'une caractéristique biométrique à l'aide de leur dispositif mobile. Le terminal d'accès est configuré pour recevoir, de chaque dispositif mobile à proximité, une clé publique de chiffrement générée par application d'une première fonction à extracteur floue sur un gabarit biométrique personnel de référence enregistré sur chaque dispositif mobile et propre à son utilisateur. Ensuite, le terminal d'accès génère un gabarit biométrique d'épreuve à partir des caractéristiques biométriques acquises auprès d'un utilisateur, et génère des clés secrètes de chiffrement en appliquant une deuxième fonction à extracteur floue sur le gabarit biométrique d'épreuve et chacune des clés publiques de chiffrement reçues ; il y autant de clés secrètes de chiffrement que de clés publiques de chiffrement reçues. Ensuite, il chiffre le gabarit biométrique d'épreuve avec chacune des clés secrètes pour générer autant de gabarits biométriques que de clés secrètes de chiffrement. Ces gabarits biométriques chiffrés sont ensuite envoyés à l'ensemble des dispositifs mobiles à proximité. Si un dispositif mobile parvient à déchiffrer l'un des gabarits biométriques d'épreuve chiffrés, il le compare au gabarit biométrique personnel de référence qui lui est propre, et en cas de correspondance, envoie un signal de succès au terminal d'accès qui autorise le dispositif mobile à accéder à une ressource.

WO 2019/078858 A1 [VISA INT SERVICE ASS [US]] 25.04.2019 décrit une méthode d'authentification biométrique limitant le risque d'attaque de l'homme du milieu (« man-in-the-middle attack »). Un premier gabarit biométrique d'épreuve d'un individu est généré par un dispositif mobile tel qu'un téléphone multifonction ou un ordinateur portable à partir d'une première acquisition de caractéristiques biométriques. Ce premier gabarit biométrique est stocké localement sur le dispositif mobile et une copie chiffrée est envoyée à un terminal d'authentification permettant l'accès à une ressource telle qu'une base de données, un réseau informatique ou une zone d'accès restreinte. Le terminal génère un deuxième gabarit biométrique d'épreuve de l'individu à partir d'une deuxième acquisition de caractéristiques biométriques, calcul un résultat chiffré à partir du premier gabarit biométrique chiffré et du deuxième gabarit biométrique par application d'une fonction de chiffrement, puis envoie le résultat chiffré au dispositif mobile. Le dispositif mobile déchiffre le résultat chiffré, compare le premier gabarit biométrique déchiffré avec le premier gabarit biométrique stocké localement et, en cas de concordance, compare le premier gabarit biométrique avec le deuxième gabarit biométrique. Si le premier gabarit biométrique et le deuxième gabarit biométrique correspondent, le dispositif mobile envoie une information d'identification telle qu'un nom d'utilisateur, un mot de passe, un numéro d'identité.

WO 2019/094071 A1 [VISA INT SERVICE ASS [US]] 16.05.2019 décrit une méthode d'identification biométrique d'individus à proximité d'un terminal d'accès biométrique permettant de réduire le nombre de comparaison d'un gabarit biométrique d'épreuve avec les gabarits biométriques de référence d'une base de données. Le terminal dispose d'une base de données de gabarits biométriques de référence d'utilisateurs préalablement enrôlés avec leurs dispositifs mobiles. Les gabarits biométriques de référence sont enregistrés de manière obfusquée dans la base de données. Lorsque le terminal d'accès détecte le dispositif mobile d'un utilisateur enrôlé à proximité, il procède à l'acquisition de caractéristiques biométriques d'épreuve du propriétaire du dispositif mobile, génère un gabarit biométrique d'épreuve et le compare au gabarit biométrique de référence associé au dispositif mobile enregistré dans la base de données.

FR 3 106 678 A1 divulgue l'utilisation de la distance calculée entre une donnée biométrique candidate et une donnée biométrique de référence pour l'authentification d'un utilisateur.

JUAN M COLORES-VARGAS ET AL dans "Video Images Fusion to Improve Iris Recognition Accuracy in Unconstrained Environments", 26 juin 2013 (2013-06-26), SAT 2015 18TH INTERNATIONAL CONFERENCE, AUSTIN, TX, USA, SEPTEMBER 24-27, 2015, décrit l'utilisation de la distance entre deux gabarits biométriques pour la reconnaissance d'un utilisateur. Ce document mentionne que des gabarits biométriques ayant été générés par le même iris d'un utilisateur auront une valeur de distance basse lorsque comparés entre eux.

### Résumé de l'invention

Un inconvénient majeur des méthodes actuelles d'authentification ou d'identification est la possibilité de fausse acceptation dès lors qu'un usurpateur puisse dérober le dispositif mobile d'un utilisateur et soumettre une caractéristique biométrique d'épreuve proche de la caractéristique biométrique de référence pour accéder aux services fournis via le terminal d'identification ou d'authentification.

Il est donc un besoin d'une solution permettant de réduire le risque de fausse acceptation lors d'un processus d'identification et d'authentification mettant en œuvre un dispositif mobile intermédiaire. En outre, une telle solution permettrait idéalement de enforcer la confidentialité et la sécurité des informations biométriques.

Selon un premier aspect de l'invention, il est fourni un procédé d'encodage, mise en œuvre par un terminal d'encodage, d'un gabarit biométrique d'épreuve, ledit procédé prend, en donnée d'entrée, une caractéristique biométrique d'épreuve, et fournit, en donnée de sortie, un gabarit biométrique d'épreuve, dans lequel le gabarit biométrique d'épreuve est généré à partir de la caractéristique biométrique d'épreuve selon un schéma d'encodage représentatif de la distance selon une métrique entre la caractéristique biométrique d'épreuve et une caractéristique biométrique de référence.

Selon certains modes de réalisation, le schéma d'encodage comprend un pré-encodeur configuré pour générer un gabarit biométrique interne de référence généré à partir de la caractéristique biométrique de référence et un gabarit biométrique intermédiaire d'épreuve généré à partir de la caractéristique biométrique d'épreuve, la distance selon une métrique est une distance entre le gabarit biométrique interne de référence et le gabarit biométrique intermédiaire d'épreuve.

Selon certains modes de réalisation, le schéma d'encodage comprend une fonction de transition ou une fonction de distribution centrée sur la distance selon une métrique entre un gabarit biométrique interne de référence généré à partir de la caractéristique biométrique de référence et un gabarit biométrique intermédiaire d'épreuve généré à partir de la caractéristique biométrique d'épreuve.

Selon certains modes de réalisation, le schéma d'encodage comprend en outre une fonction de génération de bruit, de préférence une fonction de génération de bruit prenant, en variable d'entrée, la caractéristique biométrique d'épreuve.

Selon certains modes de réalisation, la fonction de génération de bruit (F-Br) comprend fonction générant un nombre aléatoire à partir de la caractéristique biométrique d'épreuve choisie parmi une fonction de hachage, une fonction de sommation pondérée ou une fonction de réduction.

Selon certains modes de réalisation, le schéma d'encodage est implémenté sous la forme d'un réseau de neurones préalablement entraîné selon un protocole enseignant-étudiant.

Selon certains modes de réalisation, le schéma d'encodage est propre au terminal biométrique.

Selon certains modes de réalisation, la caractéristique biométrique de référence est propre à l'utilisateur du terminal d'encodage.

Selon un deuxième aspect de l'invention, il est fourni un terminal d'encodage pour la mise en œuvre d'un procédé d'encodage selon l'un des quelconques modes de réalisation du premier aspect de l'invention.

Selon certains modes de réalisation, le terminal d'encodage est un dispositif électronique mobile, de préférence un téléphone mobile multifonction (« smartphone »).

Selon un troisième aspect de l'invention, il est fourni un procédé d'identification biométrique comprenant les étapes suivantes :
a) Transmettre, par un terminal d'identification biométrique, une caractéristique biométrique d'épreuve d'un individu à un terminal d'encodage ;
b) Générer, par le terminal d'encodage un gabarit biométrique d'épreuve à l'aide d'un procédé d'encodage selon l'un quelconque mode de réalisation du premier aspect de l'invention ;
c) Recevoir, par le terminal d'identification biométrique, le gabarit biométrique d'épreuve ;
d) Comparer, par le terminal d'identification biométrique, le gabarit biométrique d'épreuve (GE-Bio) avec au moins un gabarit biométrique de référence d'une base de données de gabarits biométriques de référence.

Selon certains modes de réalisation, l'étape d) de comparaison est exécutée selon un protocole de recherche approximative, de préférence un protocole de recherche approximative fondée sur une distance de Hamming.

Selon certains modes de réalisation, le procédé d'identification biométrique comprend en outre une étape de génération, par le terminal d'encodage, d'une preuve d'encodage du gabarit biométrique d'épreuve à partir de la caractéristique biométrique d'épreuve, de préférence une preuve d'encodage à divulgation nulle de connaissance, et une étape de vérification, par le terminal d'identification biométrique, de la preuve d'encodage.

Selon certains modes de réalisation, l'étape (d) de comparaison est exécutée selon une méthode de dissimulation de données et/ou de dissimulation de de fonctions.

Selon un quatrième aspect de l'invention, il est fourni un système d'identification biométrique pour la mise en œuvre d'un procédé d'identification selon l'un des quelconques modes de réalisation du troisième aspect de l'invention. En particulier, il est fourni un système d'identification biométrique comprenant :
- un terminal d'identification biométrique comprenant un dispositif d'acquisition configuré pour acquérir au moins une caractéristique biométrique d'un utilisateur ;
- un support d'enregistrement comprenant une base de données de gabarits biométriques de référence ;
- un terminal d'encodage selon l'un des quelconques modes de réalisation du deuxième aspect de l'invention ;
le système étant configuré pour exécuter les étapes d'un procédé d'identification biométrique selon l'un des quelconques modes de réalisation du troisième aspect de l'invention.

### Brève description des dessins

Fig. 1 est une représentation schématique d'un système d'identification biométrique comprenant un terminal d'identification biométrique et un terminal d'encodage.
Fig. 2 est une représentation schématique d'un terminal d'identification biométrique.
Fig. 3 est une représentation schématique d'un terminal d'encodage.
Fig. 4 est un diagramme de fonctionnement d'un terminal d'identification biométrique selon un premier mode de réalisation.
Fig. 5 est un diagramme de fonctionnement d'un terminal d'encodage selon un premier mode de réalisation.
Fig. 6 est un diagramme de fonctionnement d'un terminal d'encodage selon un deuxième mode de réalisation
Fig. 7 est un diagramme de fonctionnement d'un terminal d'identification biométrique selon un premier mode de réalisation.
Fig. 8 est un diagramme de flux d'un procédé d'encodage conformément à l'invention.
Fig. 9 est un diagramme de flux d'un procédé d'encodage selon un premier mode de réalisation.
Fig. 10 est un diagramme de flux d'un procédé d'encodage selon un deuxième mode de réalisation.
Fig. 11 un diagramme de flux d'un procédé d'encodage selon un troisième mode de réalisation

### Description détaillée des modes de réalisation

Dans le cadre de la présente divulgation, les modes de réalisation sont décrits dans le contexte général d'un ou plusieurs matériels ou dispositifs capables d'exécuter des instructions préchargées telles que, par exemple, des instructions exécutables par ordinateur pour l'exécution de modules de programme. Les modules de programme peuvent comprendre une ou plusieurs routines, programmes, objets, variables, commandes, scripts, fonctions, applications, composants, structures de données qui peuvent exécuter des tâches particulières ou mettre en œuvre des types particuliers de données abstraites.

Certains modes de réalisation peuvent également être mis en œuvre dans des environnements informatiques distribués où les tâches sont exécutées par des dispositifs distants de traitement de données qui sont reliés par un réseau de communication. Dans un environnement informatique distribué, les modules de programme peuvent se trouver sur des supports de stockage informatique locaux et/ou distants, y compris des dispositifs de stockage mémoire.

Dans le cadre de l'invention, il est entendu par « gabarit biométrique » toute type de données biométriques dérivées d'une ou plusieurs caractéristiques biométriques brutes à la suite de leur traitement par un algorithmique ci-après dénommé appelé encodage. Les données biométriques dérivées constituant le gabarit biométrique sont généralement distinctes des données biométriques brutes dont elles sont dérivées. De préférence, le gabarit biométrique est conforme à la définition de la norme ISO/IEC 19794-1:2011 Information technology - Biometric data interchange formats - Part 1: Framework.

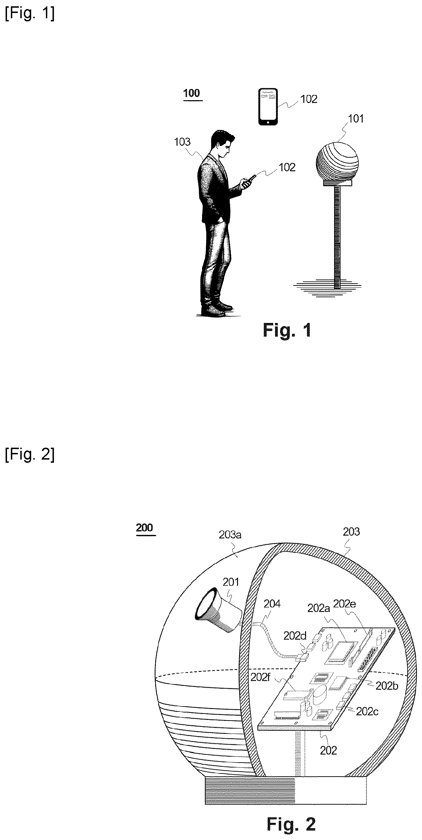

En référence à la Fig. 1, un système 100 d'identification biométrique peut comprendre un terminal 101 d'identification biométrique et un terminal d'encodage 102 associé ou propre à un utilisateur 103. Le terminal 101 d'identification biométrique et le terminal d'encodage 102 sont, de préférence, configurés pour échanger des données via une connexion à distance sécurisée.

Lorsqu'un utilisateur 101 souhaite s'identifier auprès du terminal 101 d'identification biométrique afin d'accéder à une ressource ou à une zone d'accès restreint, il soumet d'abord une requête d'identification auprès dudit terminal 101 d'identification biométrique. Selon un premier exemple, la requête peut être soumise à l'aide d'une interface humain-machine, « IHM », (non représentée) dont est munie le terminal 101 d'identification biométrique. Selon un deuxième exemple, elle peut être soumise par l'intermédiaire du terminal 103 d'encodage via une connexion à distance, de préférence sécurisée.

Une fois la requête soumise, le terminal 101 d'identification biométrique procède à l'acquisition d'une caractéristique biométrique d'épreuve de l'utilisateur 103 à l'aide d'un dispositif d'acquisition approprié puis la transmet au terminal 102 d'encodage. La caractéristique biométrique est généralement choisie parmi les dermatoglyphes d'un ou plusieurs doigts, les dermatoglyphes palmaires, un ou plusieurs iris, ou un visage, ou leur combinaison.

Dès réception de la caractéristique biométrique d'épreuve, le terminal 102 d'encodage en génère un gabarit biométrique d'épreuve selon un schéma d'encodage, puis envoie ce gabarit biométrique d'épreuve au terminal 101 d'identification biométrique. Dès lors que le terminal 101 d'identification biométrique reçoit le gabarit biométrique d'épreuve, il le compare à un ou plusieurs gabarits biométriques de référence stockés dans une base de données. S'il existe une correspondance entre le gabarit biométrique d'épreuve et au moins un gabarit biométrique de référence, l'utilisateur 103 est identifié. Il est alors autorisé à accéder à la ressource ou à la zone d'accès. Dans le cas contraire, l'utilisateur 103 n'est pas identifié et l'accès lui est refusé. Le terminal 101 d'identification biométrique et/ou le terminal d'encodage peut notifier l'utilisateur de la réussite ou de l'échec de l'identification à l'aide d'un signal lumineux, un signal sonore, un message, ou leur combinaison.

Un système 100 d'identification biométrique tel que décrit précédemment peut être utilisé à des fins d'accès à un pu plusieurs services à distance, autoriser un accès à des informations stockées dans une base collective ou personnelle de données, vérifier l'identité d'une ou plusieurs personnes, récupérer des identifiants de connexion, ou encore récupérer une ou plusieurs adresses de portefeuilles de monnaie électronique telle qu'une crypto-monnaie.

Un exemple 200 de terminal 101 d'identification biométrique est illustré sur la Fig. 2. Le terminal 200 d'identification biométrique comprend un module physique 201 d'acquisition, un module physique 202 de traitement de données et un boîtier 203 de protection.

Le module physique 201 d'acquisition se présente sous la forme d'une caméra adaptée à l'acquisition de l'image d'un ou plusieurs iris ou d'un visage. Le boîtier 203a de protection comprend une fenêtre 203a transparente ou semi-transparente pour permettre l'acquisition de l'image par le module 201 d'acquisition. De manière alternative ou complémentaire, le module physique 201 d'acquisition peut comprendre un dispositif d'acquisition d'un dermatoglyphe d'un ou plusieurs doigts ou d'un dermatoglyphe palmaire. En surface du boitier 203 de protection une zone d'acquisition peut être aménagé laissant à découvert la surface active dudit dispositif d'acquisition afin qu'un utilisateur 103 puisse y place un ou plusieurs de ses doigts et/ou la paume d'une de ses mains.

Le module physique 201 d'acquisition transmet les données acquises au module physique 202 de traitement de données au moyen d'une connecteur 204. Le module physique 202 de traitement de données comprend des moyens pour la mise en œuvre d'une identification biométrique. Il est chargé d'exécuter automatiquement des séquences d'opérations arithmétiques ou logiques pour réaliser des tâches ou des actions. Ce module, communément appelé ordinateur, peut comprendre une ou plusieurs unités centrales de traitement (CPU) 202a et/ou un ou plusieurs processeurs graphiques (GPU) 202b, un module physique 202c de communication à distance, un ou plusieurs modules physique 202d d'entrée / sortie pour l'échanges de données avec des dispositifs externes, un support 202e de stockage transitoire tel qu'une mémoire vive (RAM), un support 202f d'enregistrement non-transitoire, et des bus de communication (non représentés) pour le transfert de données entre les composants internes module 202 de traitement de données.

Le module physique 202 de traitement de données permet l'exécution d'un ou plusieurs modules de programmes comprenant des instructions qui, lorsque le ou les modules de programme sont exécutés, conduisent le module 202 de traitement de données à mettre en œuvre une identification biométrique. Le ou les modules de programme peuvent être écrits en tout langage de programmation, compilé ou interprété. Ils peuvent faire partie d'une solution logicielle, c'est-à-dire d'une collection d'instructions exécutables, de codes, de scripts ou autres et/ou de bases de données.

Des exemples de terminal 101 d'identification biométrique sont décrits dans l'état de la technique, notamment dans WO 2023/028221 A1 [TOOLS FOR HUMANITY CORP [US] 02.03.2023, WO 2023/028242 A1 [TOOLS FOR HUMANITY CORP [US] 01.03.2023 ; US 2008/253622 A1 [RETICA SYSTEM INC [US]] 16.10.2008 ; US 2006/088193 A1 [RETICA SYSTEM INC [US]] 24.07.2006 ; FR 3069681 A1 [SAFRAN IDENTITY & SECURITY [FR]] 01.02.2019.

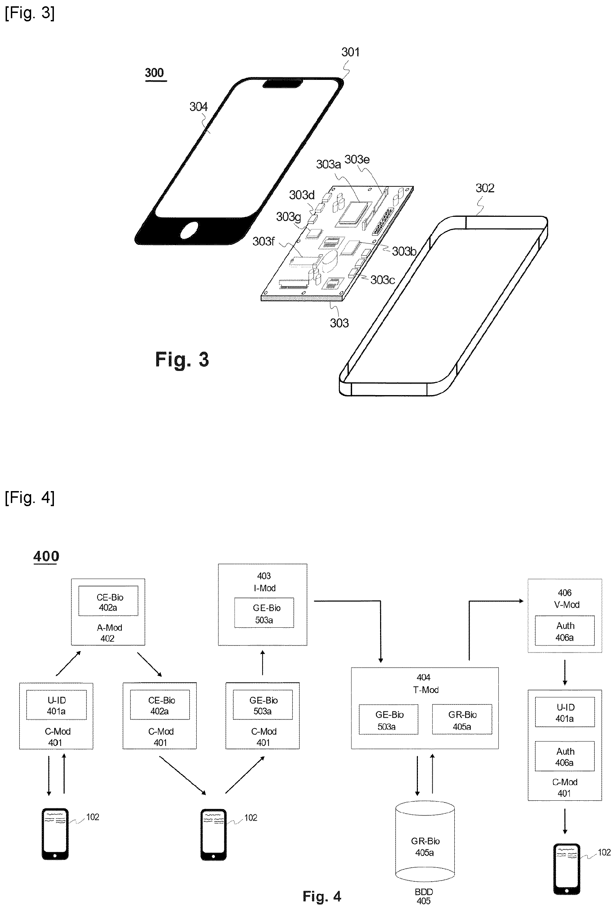

Sur la Fig. 3 est représenté un exemple 300 de terminal 102 d'encodage pour la mise en œuvre d'une identification biométrique. Le terminal 102, 300 d'encodage est un dispositif électronique mobile, de préférence un téléphone mobile multifonction (« smartphone »). Le terminal 102, 300 d'encodage comprend un boitier supérieur 301 de protection, un boîtier inférieur de protection, un module physique 202 de traitement de données et une interface humain-machine, « IHM », 304 sous la forme d'un écran tactile.

Le module physique 303 de traitement de données comprend des moyens pour la mise en œuvre d'une identification biométrique. Il est chargé d'exécuter automatiquement des séquences d'opérations arithmétiques ou logiques pour réaliser des tâches ou des actions. Ce module physique 303, communément appelé ordinateur, peut comprendre une ou plusieurs unités centrales de traitement (CPU) 303a et/ou un ou plusieurs processeurs graphiques (GPU) 303b, un module physique 303c de communication à distance, un ou plusieurs modules physique 303d d'entrée / sortie pour l'échanges de données avec des dispositifs externes, un support 303e de stockage transitoire tel qu'une mémoire vive (RAM), un support 303f d'enregistrement non-transitoire, et des bus de communication (non représentés) pour le transfert de données entre les composants internes module 303 de traitement de données. Il peut également comprendre un élément sécurisé 303g pour le stockage de clés cryptographiques, l'exécution d'algorithmes de chiffrement, et/ou le stockage et/ou le chiffrement de tout autre algorithme et/ou donnée dont la sécurité et la confidentialité doit être préservées.

Le module physique 303 de traitement de données permet l'exécution d'un ou plusieurs modules de programmes comprenant des instructions qui, lorsque le ou les modules de programme sont exécutés, conduisent le module 303 de traitement de données à mettre en œuvre une identification biométrique. Le ou les modules de programme peuvent être écrits en tout langage de programmation, compilé ou interprété. Ils peuvent faire partie d'une solution logicielle, c'est-à-dire d'une collection d'instructions exécutables, de codes, de scripts ou autres et/ou de bases de données.

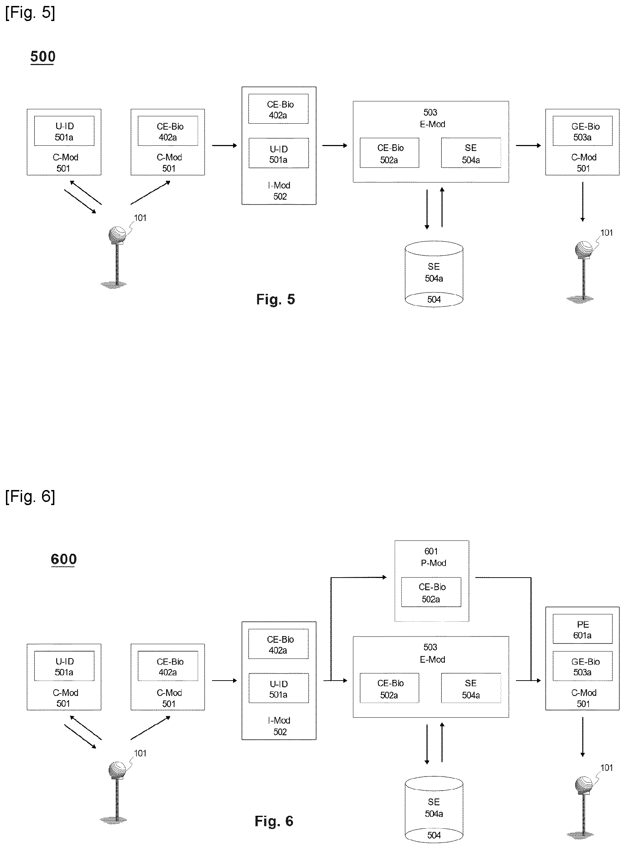

Sur la Fig. 4 et Fig. 5 sont respectivement représentés les diagrammes 400, 500 de fonctionnement d'un terminal 101, 200 d'identification biométrique et d'un terminal 102, 300 d'encodage pour la mise en œuvre d'une identification biométrique.

En référence à la Fig. 4, le terminal 101, 200 d'identification biométrique peut comprendre un module 401 de programme de communication (C-Mod), un module 402 de programme d'acquisition d'une caractéristique biométrique d'épreuve (CE-Bio), un module 403 de programme d'entrée de données (I-Mod), un module 404 de programme de traitement de données (T-Mod), une base 405 de données (BDD), et un module 406 de programme de validation (V-Mod).

Le module 403 de programme d'entrée de données (I-Mod), le module 404 de programme de traitement de données (T-Mod), et le module 406 de programme de validation (V-Mod) peuvent être mis en œuvre par le module physique 202 de traitement de données du terminal 101, 200 d'identification biométrique décrit dans le cadre de la Fig. 2. Le module 401 de programme de communication (C-Mod) et le module 402 de programme d'acquisition d'une caractéristique biométrique d'épreuve (CE-Bio) peuvent être mise en œuvre par le module physique 202c de communication et le module physique 201 d'acquisition dudit terminal 102, 200. La base 405 de données (BDD) peut être enregistrée sur le support 202f d'enregistrement non-transitoire du module 202 de traitement de données. Alternativement, elle peut être stockée dans un support de stockage électronique non transitoire d'un serveur distant avec lequel le terminal 101, 200 d'identification biométrique a établi une communication distante sécurisée via, par exemple, le module 401 de programme de communication (C-Mod).

En référence à la Fig. 5, le terminal 102, 300 d'encodage peut comprendre un module 501 programme de communication (C-Mod), un module 502 de programme d'entrée de données (I-Mod), un module 503 d'encodage (E-Mod) et une zone 504 d'enregistrement non transitoire.

Le module 502 de programme d'entrée de données (I-Mod) et le module 502 de programme d'encodage (E-Mod) peuvent être mis en œuvre par le module physique 303 de traitement de données du terminal 102, 300 d'encodage décrit dans le cadre de la Fig. 3. Le module 501 de programme de communication (C-Mod) peut être mise en œuvre par le module physique 303c de communication. La zone 504 de d'enregistrement non transitoire peut être mise en œuvre sur le support 202f d'enregistrement non-transitoire du module 202 de traitement de données et/ou l'élément sécurisé 303g.

L'implémentation du procédé d'identification biométrique brièvement décrit dans le contexte de la Fig. 1 est maintenant détaillé en référence aux Fig. 2 à 5.

Le module 301 de programme de communication du terminal 101, 200 d'identification biométrique est adapté à l'échange de données avec des dispositifs électroniques distants, tels que le terminal 102, 300 d'encodage, selon une connexion distance sécurisée. La connexion sécurisée est établie par les modules 401, 501 de programme de communication de chacun des terminaux 101, 200, 102, 300. Lorsqu'une requête en identification biométrique est soumise auprès du terminal 101, 200 d'identification biométrique, le terminal 102, 300 d'encodage et du terminal 101, 200 d'identification peuvent se transmettre des identifiants 401a, 501a (U-ID) dont la fonction est de permettre une identification univoque de chacun des terminaux 101, 200, 102, 300 pour l'ensemble des échanges ultérieurs, et ainsi vérifier l'origine des données échangés. Les identifiants 401a, 501a comprennent tout type adapté de données. Des exemples d'identifiant peut être une adresse MAC, un identifiant utilisateur 103, un numéro EMEI, un nombre aléatoire généré par de chacun des terminaux 101, 200, 102, 300, ou leur combinaison. De préférence, les données échangées entre le terminal 102, 300 d'encodage et le terminal 101, 200 d'identification biométrique sont chiffrés à l'aide, par exemple, d'un protocole de chiffrement asymétrique.

Une fois la communication établie entre le terminal 101, 200 d'identification biométrique et le terminal 102, 300 d'encodage, le module 402 de programme d'acquisition biométrique du terminal 101, 200 d'identification biométrique procède à l'acquisition d'une caractéristique biométrique 402a d'épreuve (CE-Bio) puis la transmet au terminal 102, 300 d'encodage via son module 401 de programme de communication (C-Mod). Le terminal 102, 300 d'encodage reçoit la caractéristique biométrique 402a d'épreuve (CE-Bio) via son module 501 de programme de communication (C-Mod). Le caractéristique biométrique 402a d'épreuve (CE-Bio) est transmise au module 502 de programme d'entrée de données, puis au module 503 de programme d'encodage (E-Mod). Le module 503 de programme d'encodage (E-Mod) génère un gabarit biométrique 503a d'épreuve (GE-Bio) par encodage de la caractéristique biométrique 402a d'épreuve (CE-Bio) selon un schéma 504a d'encodage (SE) enregistré dans la zone 504 d'enregistrement non transitoire. Le gabarit biométrique 503a d'épreuve (GE-Bio) est ensuite transmis au module 501 de programme de communication (C-Mod) pour envoi au terminal 101, 200 d'identification biométrique.

Le module 401 de programme de communication (C-Mod) du terminal 101, 200 d'identification biométrique reçoit le gabarit biométrique 503a d'épreuve et le transmet au module 404 de programme de traitement via le module 403 de programme d'entrée de données (I-Mod). Le module 404 de programme de traitement (T-Mod) opère une comparaison du gabarit biométrique 503a d'épreuve avec un ou plusieurs gabarits biométriques 405a de référence (GR-Bio) enregistrés dans une base de données 405. A chaque gabarit biométrique 405a de référence (GR-Bio) est associé un utilisateur 103. La base de données 405 peut être enregistré dans le support 202f d'enregistrement électronique non transitoire propre au terminal 101, 200 d'identification biométrique. Alternativement, elle peut être stockée dans un support de stockage électronique non transitoire d'un serveur distant avec lequel le terminal 101, 200 d'identification biométrique a établi une communication distante sécurisée.

La comparaison du gabarit biométrique 503a d'épreuve (GR-Bio) avec un ou plusieurs gabarits biométriques 405a de référence (GR-Bio) est réalisée selon toute méthode adaptée. Par exemple, lorsque les gabarits biométriques sont sous forme de vecteurs d'encodage, la comparaison peut être un calcul d'un score de correspondance sous la forme d'un produit scalaire, d'un produit vectoriel ou d'une distance euclidienne entre le vecteur représentatif du gabarit biométrique 503a d'épreuve (GE-Bio) et chacun des vecteurs représentatifs des gabarits biométriques 405a de référence (GR-Bio).

Selon certains modes de réalisation, la comparaison du gabarit biométrique 503a d'épreuve (GE-Bio) avec un ou plusieurs gabarits biométriques 405a de référence (GR-Bio) est exécutée selon un protocole de recherche approximative, de préférence un protocole de recherche approximative (« fuzzy search ») fondée sur une distance de Hamming. La recherche approximative est avantageusement rapide pour la comparaison de données complexes, telles que les gabarits biométriques, et/ou lorsque le nombre de gabarits biométriques à comparer est élevée. Un exemple d'implémentation d'une recherche approximative fondée sur une distance de Hamming est décrit dans l'article Galbraith & Zoberning (2019), "Obfuscated fuzzy hamming distance and conjunctions from subset product problems.", Theory of Cryptography Conference.

Selon certains modes préférés de réalisation, la comparaison du gabarit biométrique 503a d'épreuve (GE-Bio) avec un ou plusieurs gabarits biométriques 405a de référence (GR-Bio) est exécutée selon une méthode de dissimulation de données et/ou de dissimulation de de fonctions (« obfuscation »). La dissimulation de données et/ou de dissimulation de de fonctions permet de rendre les programmes et algorithmes inintelligibles tout en préservant leur fonctionnalité ou leur opérabilité. Autrement dit, dans le cadre de l'invention, la manière dont la comparaison du gabarit biométrique 503a d'épreuve (GE-Bio) avec un ou plusieurs gabarits biométriques 405a de référence (GR-Bio) est exécutée reste dissimulé à tout tiers observateur sans préjudice sur le résultat et les performances de la comparaison. Des exemples d'implémentation d'une méthode de dissimulation de données et/ou de dissimulation de de fonctions sont décrits dans les articles Galbraith & Zoberning (2019), "Obfuscated fuzzy hamming distance and conjunctions from subset product problems.", Theory of Cryptography Conference, et Barak et al. (2014) "Obfuscation for evasive functions." Theory of Cryptography Conference. Berlin, Heidelberg: Springer Berlin Heidelberg.

Le module 406 de programme de validation (V-Mod) détermine si le ou les résultats des comparaisons effectuées par le module 405 de programme de traitement (T-mod) vérifie au moins un critère de validation, auquel cas l'utilisateur 103 est identifié. Par exemple, lorsque ces résultats sont des scores de correspondance, le critère de validation peut être une valeur de seuil à laquelle les valeurs des scores sont comparées. Si la valeur d'au moins un score est inférieure à la valeur de seuil, l'utilisateur 103 est considérée comme identifié. En revanche, si les valeurs des scores sont toutes supérieures à la valeur de seuil, l'utilisateur n'est pas identifié et tout accès lui est refusé par le terminal 101, 200 d'identification biométrique.

Le module 406 de programme de validation (V-Mod) peut générer une variable 406a d'authentification (Auth), par exemple une variable booléenne, selon que l'identification est réussie (Auth = VRAI) ou non (Auth = False). La valeur de la variable 406a d'authentification peut être transmise au module 401 de programme de communication pour informer l'utilisateur 103 de la réussite ou de l'échec de l'identification via le module 501 de programme de communication (C-Mod) du terminal 102, 300 d'encodage.

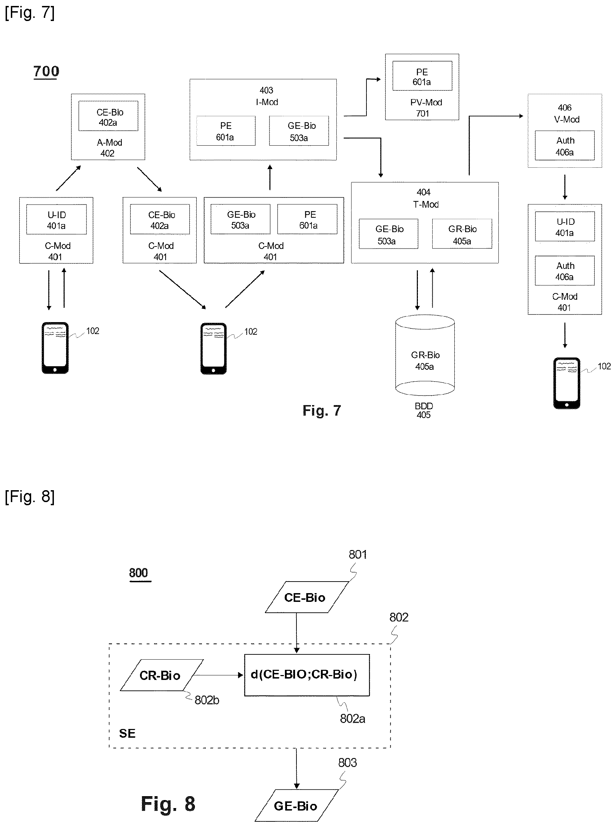

En référence à la Fig. 6, le terminal d'encodage 102, 300 peut comprendre un module de programme 601 de génération (P-Mod) d'une preuve 601a d'encodage (PE) du gabarit biométrique 503a d'épreuve (GE-Bio) à partir de la caractéristique biométrique 402a d'épreuve (CE-Bio) transmise par le terminal 101, 200 d'identification biométrique. Après génération, cette preuve 601a d'encodage (PE) est transmise au terminal 101, 200 d'identification biométrique en même temps que le gabarit biométrique 503a d'épreuve (GE-Bio). En référence à la Fig. 7, le terminal 101, 200 d'identification biométrique peut comprendre un module de programme 701 de vérification (PC-Mod) de la preuve d'encodage (PE) reçue.

La fonction de la preuve d'encodage est de permettre au terminal 101, 200 d'identification biométrique de vérifier que le gabarit biométrique d'épreuve a été effectivement généré par le terminal d'encodage 102, 300 à partir de la caractéristique biométrique d'épreuve qui lui a transmise, et non à partir d'une autre donnée. De préférence, la preuve d'encodage est une preuve à divulgation nulle de connaissance.

A titre d'exemple, lorsque le schéma 802, 902, 1002, 1102 d'encodage (SE) est notamment implémenté sous la forme d'un réseau de neurones conformément aux modes de réalisation décrits ci-après, une preuve à divulgation nulle de connaissance peut être générée selon la méthode décrite dans South et al. (2024) "Verifiable evaluations of machine learning models using zkSNARKs." arXiv preprint arXiv:2402.02675.

Conformément à l'invention, en référence à la Fig. 8, le terminal 101, 300 d'encodage comprend des moyens pour mettre en œuvre un procédé 800 d'encodage d'un gabarit biométrique 803 d'épreuve, ledit procédé prend, en donnée d'entrée, une caractéristique biométrique 801 d'épreuve (CE-Bio), et fournit, en donnée de sortie, un gabarit biométrique 803 d'épreuve (GE-Bio), dans lequel le gabarit biométrique 803 d'épreuve (GE-Bio) est généré à partir de la caractéristique biométrique 801 d'épreuve (CE-Bio) selon un schéma 802 d'encodage (SE) représentatif de la distance 802a (d(CE-Bio, CR-Bio)) selon une métrique entre la caractéristique biométrique 801 d'épreuve (CE-Bio) et une caractéristique biométrique 802b de référence (CR-Bio).

Grâce au procédé 800 d'encodage selon l'invention, le gabarit biométrique 803 d'épreuve (GE-Bio) généré par le terminal 101, 300 d'encodage est d'autant plus éloigné de tout gabarit biométrique de référence (GR-Bio) auquel il est susceptible d'être comparé ultérieurement, que la caractéristique biométrique 801 d'épreuve (CE-Bio) à partir duquel il a été généré est éloignée de la caractéristique biométrique 802b de référence (CR-Bio). Ainsi, le risque de fausse acceptance est considérablement réduit car plus la caractéristique biométrique 801 d'épreuve (CE-Bio) est éloignée de la caractéristique biométrique 802b de référence (CR-Bio) plus le gabarit biométrique 803 d'épreuve (GE-Bio) est altéré comparativement à une situation dans laquelle la caractéristique biométrique 801 d'épreuve (CE-Bio) serait identique ou proche de la caractéristique biométrique 802b de référence (CR-Bio).

A titre d'exemple illustratif, dans le contexte d'un procédé d'identification biométrique illustré par les Fig. 1 à 5, un utilisateur 103 se présente devant un terminal 101, 200 d'identification biométrique pour accéder à une ressource. Dans l'hypothèse où l'utilisateur 103 est un usurpateur d'identité, il est muni d'un terminal 102, 300 d'encodage qu'il a dérobé auprès une personne tierce et tente de se faire passer pour cette personne. La caractéristique biométrique 802b de référence (CR-Bio) utilisée dans le procédé 800 d'identification mis en œuvre par le terminal 102, 200 d'encodage dérobé est celle de la personne tierce.

Le terminal 101, 200 d'identification biométrique procède à l'acquisition d'une caractéristique biométrique 402a d'épreuve (CE-Bio) de l'utilisateur 103 usurpateur et la transmet au terminal 102, 300 d'encodage. Le terminal 102 d'encodage reçoit la caractéristique biométrique 402a, 801 d'épreuve (CE-Bio) et en génère un gabarit biométrique 503a, 803 d'épreuve (GE-Bio) selon son schéma 802 d'encodage (SE), c'est-à-dire représentatif d'une distance 802a (d(CE-Bio, CR-Bio)) selon une métrique entre la caractéristique biométrique 402a, 801 d'épreuve (CE-Bio) de l'usurpateur 103 et la caractéristique biométrique 802b de référence (CR-Bio) de la personne tierce à laquelle appartient le terminal 102, 300 d'encodage. Puisque la caractéristique biométrique 402a, 801 d'épreuve (CE-Bio) de l'utilisateur 103 usurpateur est différente de celle de la personne tierce propriétaire, le terminal 102, 300 d'encodage génère un gabarit biométrique 503a, 803 d'épreuve (GE-Bio) complètement différent de celui qu'il aurait généré si l'utilisateur 103 avait été la personne tierce.

Une fois le gabarit biométrique 503a, 803 d'épreuve (GE-Bio) généré, le terminal 102, 300 d'encodage le transmet au terminal 101, 200 d'identification biométrique. Ce dernier le compare aux gabarits biométriques 405a de référence (GR-Bio) d'une base de données 405, et échoue à établir une correspondance avec un gabarit biométrique 405a de référence (GR-Bio) de la personne tierce enregistré dans la base de données 405.

En d'autres termes, le procédé 800 d'encodage selon l'invention permet de camoufler tout gabarit biométrique d'épreuve (GE-Bio) « authentique » susceptible d'être généré à partir d'une caractéristique biométrique d'épreuve (CR-Bio) similaire à la caractéristique biométrique de référence (CR-Bio) tant que la caractéristique biométrique d'épreuve (CE-Bio) ne correspond pas à ladite caractéristique biométrique de référence (CR-Bio). En particulier, ce camouflage est obtenu par génération d'un gabarit biométrique d'épreuve (GE-Bio) d'autant plus aléatoire que la caractéristique biométrique d'épreuve (CE-Bio) est différence de la caractéristique biométrique de référence (CR-Bio).

Le procédé 800 d'encodage selon l'invention est mis en œuvre par un ou plusieurs modules de programme, notamment par le module 503 de programme d'encodage du terminal 102, 300 d'encodage. Le ou les modules de programme sont exécutés par le module 303 de traitement de données du terminal 102, 300 d'encodage. Tout ou partie de ces modules peuvent être exécuté par un élément sécurisé 303g du module physique 303 de traitement de données.

Il convient ici de souligner que le schéma 802 d'encodage (SE) est fondé sur une distance 802a (d(CE-Bio, CR-Bio)) selon une métrique entre la caractéristique biométrique 801 d'épreuve (CE-Bio) et une caractéristique biométrique 802b de référence (CR-Bio). Autrement dit, la distance selon une métrique est une distance entre les données brutes de la caractéristique la caractéristique biométrique 801 d'épreuve (CE-Bio) et la caractéristique biométrique 802b de référence (CR-Bio). Eventuellement, les données brutes peuvent faire l'objet d'un prétraitement numérique, tel qu'une réduction de bruit, une détection de contours ou encore un rognage, sans que les informations qu'elles constituent en soient modifiées comme dans le cas d'une génération de gabarit biométrique.

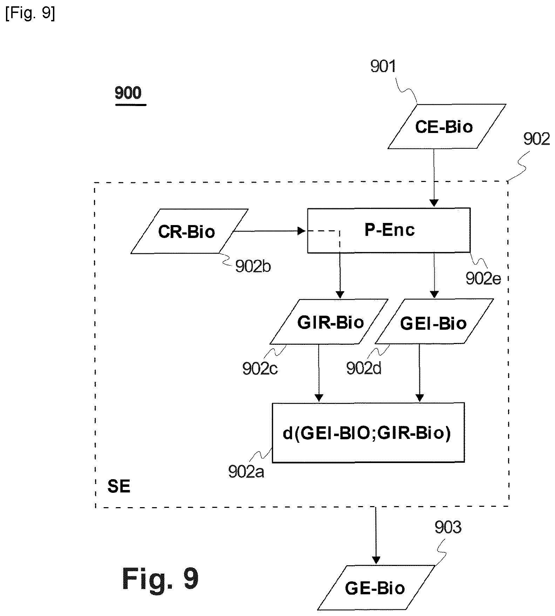

De manière équivalente, en référence à la Fig. 9, le schéma 902 d'encodage (SE) peut être fondé sur une distance 902a d(GEI-Bio, GIR-Bio) entre un gabarit biométrique interne 902c de référence (GIR-Bio) généré à partir de la caractéristique biométrique 902b de référence (CR-Bio) et un gabarit biométrique intermédiaire 902d d'épreuve (GEI-Bio) généré à partir de la caractéristique biométrique 901 d'épreuve (CE-Bio). Dans ces modes de réalisation, le schéma 902 d'encodage (SE) peut comprendre un pré-encodeur 902e (P-Enc) configuré pour générer un gabarit biométrique interne 902c de référence (GIR-Bio) généré à partir de la caractéristique biométrique 902b de référence (CR-Bio) et un gabarit biométrique intermédiaire 902d d'épreuve (GEI-Bio) généré à partir de la caractéristique biométrique 901 d'épreuve (CE-Bio). Le terminal 102, 300 d'encodage génère alors un gabarit biométrique 903 d'épreuve (GE-Bio) sur la base de cette distance 902a conformément au schéma 902 d'encodage (SE).

Le pré-encodeur 902e (P-Enc) peut être un encodeur générique de l'état de la technique. Par exemple, dans le cas d'une caractéristique biométrique constituée par une ou plusieurs images d'un utilisateur 103, il peut être un pré-encodeur tel que décrit dans Hasnat et al. (2017) "Deepvisage: Making face recognition simple yet with powerful generalization skills." Proceedings of the IEEE International Conference on Computer Vision Workshops. Le gabarit biométrique interne 902c de référence (GIR-Bio) généré à partir de la caractéristique biométrique 902b de référence (CR-Bio) et le gabarit biométrique intermédiaire 902d d'épreuve (GEI-Bio) généré à partir de la caractéristique biométrique 901 d'épreuve (CE-Bio) se présente généralement sous la forme de vecteurs.

La métrique de distance entre la caractéristique biométrique 901 d'épreuve (CE-Bio) et la caractéristique biométrique 902b de référence (CR-Bio) et/ou entre un gabarit biométrique interne 902c de référence (GIR-Bio) généré à partir de la caractéristique biométrique 902b de référence (CR-Bio) et un gabarit biométrique intermédiaire 902d d'épreuve (GEI-Bio) généré à partir de la caractéristique biométrique 901 d'épreuve (CE-Bio) est de tout type adapté. En particulier, elle peut être, un produit scalaire, un produit vectoriel, une distance euclidienne ou encore une distance de Hamming.

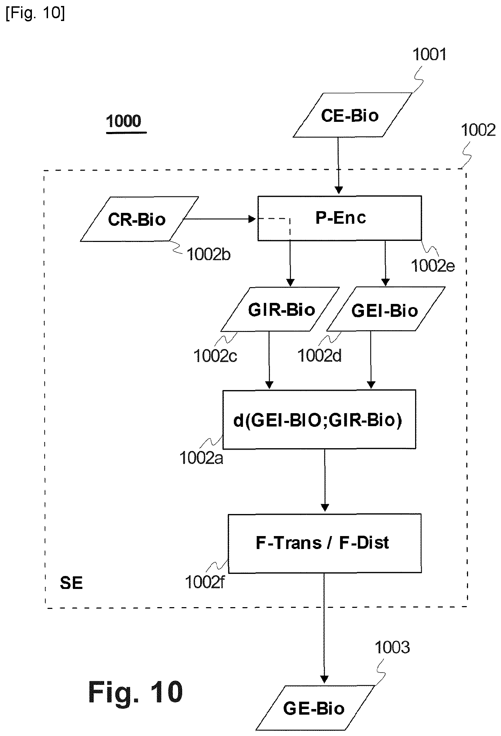

Selon certains modes de réalisation, en référence à la Fig. 10, le schéma 10002 d'encodage (SE) comprend une fonction 1002f de transition F-Trans ou une fonction de distribution F-Dist centrée sur la distance 1002a d(GEI-Bio, GIR-Bio) selon une métrique entre un gabarit biométrique interne 1002c de référence (GIR-Bio) généré à partir de la caractéristique biométrique 1002b de référence (CR-Bio) et un gabarit biométrique intermédiaire 1002b d'épreuve (GEI-Bio) généré à partir de la caractéristique biométrique 1001 d'épreuve (CE-Bio).

A titre d'exemple de mode de réalisation, une fonction 1002f de transition F-Trans du schéma 1002 d'encodage peut être exprimée à l'aide de la formule suivante : $GE = {f}_{Trans} \left(GEI\right) = h \left(GEI. GIR\right) \times GIR$

**Où GE** est le gabarit biométrique d'épreuve (GE-Bio), GEI est un gabarit biométrique intermédiaire 1002b d'épreuve (GEI-Bio) généré à partir de la caractéristique biométrique 1001 d'épreuve (CE-Bio), GIR est un gabarit biométrique interne 1002c de référence (GIR-Bio) généré à partir de la caractéristique biométrique 1001 de référence (CR-Bio), *GEI. GIR* est le produit scalaire entre GEI et GIR et représente la distance 1002a d(GEI-Bio, GIR-Bio) entre le gabarit biométrique intermédiaire 1002b d'épreuve (GEI-Bio) et le gabarit biométrique interne 1002c de référence (GIR-Bio). La fonction h est une fonction décroissante telle que : $h : \left[0, 1\right] \to \left[0, 1\right] , x \to \left\{\begin{matrix}1 si x = 1 \\ {lim}_{x \to 0} h \left(x\right) = 0\end{matrix}\right.$

Lorsque le gabarit biométrique intermédiaire 1002d d'épreuve (GEI-Bio) généré à partir de la caractéristique biométrique 1001 d'épreuve (CE-Bio) est proche du gabarit biométrique interne 1002c de référence (GIR-Bio) généré à partir de la caractéristique biométrique 1002b de référence (CR-Bio), autrement dit lorsque la caractéristique biométrique 1001 d'épreuve (CE-Bio) et la caractéristique biométrique 1002b de référence (CR-Bio) appartiennent au même utilisateur 103, leur produit scalaire tend vers l'unité. Le schéma 1002 d'encodage (SE) génère, via la fonction 1002f de transition F-Trans, un gabarit biométrique 1003 d'épreuve (GE-Bio) similaire, voire identique, au gabarit biométrique 405a de référence (GR-Bio) attendu par le terminal 101, 200 d'identification biométrique. En revanche, si le gabarit biométrique intermédiaire 1002d d'épreuve (GEI-Bio) et gabarit biométrique interne 1002c de référence (GIR-Bio) ne correspondent pas, le produit scalaire tend vers zéro. Le schéma 1002 d'encodage (SE) génère, via la fonction 1002f de transition F-Trans, un gabarit biométrique 1003 d'épreuve (GE-Bio) très différent du gabarit biométrique 405a de référence (GR-Bio) attendu par le terminal 101, 200 d'identification biométrique.

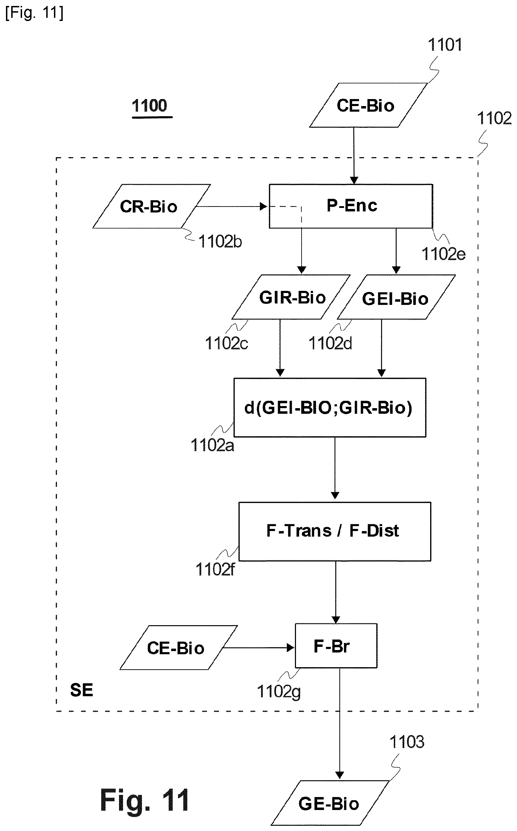

Afin d'accroître le niveau de sécurité, et donc réduire le risque de fausse acceptante, il peut être avantageux d'accroître le degré de dissimilitude de la caractéristique biométrique de référence en cas d'usurpation d'identité. Selon certains modes avantageux de réalisation, en référence à la Fig. 11, le schéma 11002 d'encodage (SE) comprend en outre une fonction 11002g de génération de bruit F-Br, de préférence une fonction de génération de bruit prenant, en variable d'entrée, la caractéristique biométrique 11001 d'épreuve (CE-Bio).

A titre d'exemple de mode de réalisation, une fonction 1102g de génération de bruit F-Br prenant, en variable d'entrée, la caractéristique biométrique 11001 d'épreuve (CE-Bio) peut être exprimée à l'aide de la formule suivante : ${f}_{Br} \left(GEI\right) = \left(1-{f}_{Trans}\left(GEI\right)\right) \times g \left(CE\right)$

Où CE est la caractéristique biométrique 11001 d'épreuve (CE-Bio), GEI est un gabarit biométrique intermédiaire 1102d d'épreuve (GEI-Bio) généré à partir de la caractéristique biométrique 1101 d'épreuve (CE-Bio), f-trans est une fonction de transition et g est une fonction générant un nombre aléatoire à partir de la caractéristique biométrique 1101 d'épreuve (CE-Bio). La fonction g peut être une fonction de hachage, une fonction de sommation pondérée ou une fonction de réduction.

A partir de l'exemple de fonction de transition f-Trans selon l'exemple précédent, le gabarit biométrique 11003 d'épreuve (GE-Bio) généré, par le terminal 102, 200 d'encodage, selon le schéma 11002 d'encodage (SE), peut être exprimé selon la relation suivante : $GE = {f}_{Trans} \left(GEI\right) + {f}_{Br} \left(GEI\right) = \left(GEI. GIR\right) \times GIR + \left(1-\left(\left(GEI. GIR\right)\times GIR\right)\right) \times g \left(CE\right) .$

Dans les modes de réalisation décrits précédemment, le schéma 802, 902, 1002, 1102 d'encodage (SE) et/ou la caractéristique biométrique 802b, 902b, 1002b, 1102b de référence (CR-Bio) sont stockés, de préférence sous une formé chiffrée, dans le support 302f d'enregistrement non transitoire module physique 303 de traitement de donnée du terminal 102, 300 d'encodage. Ils peuvent également être enregistrées dans un élément sécurisé 303a du module physique 303 de traitement de donnée du terminal 102, 300 d'encodage. Le ou les modules 503 de programmes d'encodage (E-mod) peuvent être exécutés au sein de cet élément sécurisé 303a.

Il est encore possible d'accroître le niveau de sécurité en évitant toute possibilité pour un usurpateur ou un fraudeur de reconstruire le schéma 802, 902, 1002, 1102 d'encodage (SE) et/ou la caractéristique biométrique 802b, 902b, 1002b, 1102b de référence (CR-Bio) par analyse des résultats de tests de force brute et d'une approche heuristique telle qu'une méthode essai-erreur. Pour cela, selon des modes avantageux de réalisation, le schéma 802, 902, 1002, 1102 d'encodage (SE) est implémenté sous la forme d'un réseau de neurones préalablement entraîné selon un protocole enseignant-étudiant.

Ainsi, un réseau de neurones peut être préalablement entraîné selon un protocole enseignant-étudiant pour apprendre à reproduire les sorties des fonctions de transition, de distribution et/ou ou de bruit décrites dans les modes précédents de réalisation ainsi que la distance 802b, 902b, 1002b, 1102b entre les caractéristiques biométriques d'épreuve (CE-Bio) et de référence (CR-Bio) et/ou les gabarits biométriques intermédiaires d'épreuve (GEI-Bio) et de référence (GIR-Bio). Un exemple de réseau de neurones entraîné selon un protocole enseignant-étudiant est décrit dans l'article Papernot et al. (2016) "Semi-supervised knowledge transfer for deep learning from private training data." arXiv preprint arXiv:1610.05755. Une telle approche a également pour avantage de pouvoir recourir à un réseau de neurones dont la structure est moins complexe que celle d'un réseau de neurones classique, c'est-à-dire celle d'un réseau de neurones conçu ab initio pour implémenter le schéma d'encodage sans un entrainement selon un protocole enseignant-étudiant. L'exécution du schéma 802, 902, 1002, 1102 d'encodage (SE) est alors plus rapide et précise.

Selon certains exemples, la méthode d'apprentissage d'un tel réseau de neurone peut en outre être fondée sur une fonction de perte dont les paramètres sont ajustés de manière que le réseau de neurones fournisse un gabarit biométrique d'épreuve (GE-Bio) d'autant plus fidèle à la caractéristique biométrique de référence (CR-Bio) que la caractéristique biométrique d'épreuve (CE-Bio) en est proche. En particulier, il peut être avantageux de recourir à une approche par réglage fin (« fine tuning ») par laquelle un réseau de neurones préalablement entrainé pour fournir un gabarit biométrique d'épreuve (GE-Bio) à partir d'une caractéristique biométrique d'épreuve (CE-Bio) est spécialisé sur la caractéristique biométrique de référence (CR-Bio).

Selon certains exemples, le réseau de neurones peut en outre être entraîné sur la base de plusieurs caractéristiques biométriques de référence (CR-Bio) de même nature afin d'accroitre la sensibilité du réseau de neurones. Il peut alors être procédé à plusieurs acquisitions d'une même caractéristique biométrique de référence (CR-Bio) de l'utilisateur 103, sur la base desquelles le réseau de neurones est entraîné via le schéma d'encodage (SE) qu'il doit reproduire.

Selon des modes préférés de réalisation, le schéma 802, 902, 1002, 1102 d'encodage (SE) est propre au terminal d'encodage biométrique 102, 300. Le schéma 802, 902, 1002, 1102 d'encodage (SE) diffère alors d'un terminal d'encodage 102, 300 à l'autre, introduisant un degré de diversité supplémentaire lors de la génération gabarit biométrique d'épreuve (GE-Bio) lorsque la caractéristique biométrique d'épreuve (CE-Bio) s'éloigne de la caractéristique biométrique 802b de référence (CR-Bio). Autrement dit d'une façon plus imagée, chaque terminal d'encodage 102, 300, via le schéma d'encodage qui lui est propre, « camoufle » ou « dissimule » d'autant plus à sa façon la caractéristique biométrique de référence (CR-Bio) que la caractéristique biométrique d'épreuve (CE-Bio) s'en différencie.

Selon certains modes de réalisation, la caractéristique biométrique de référence (CR-Bio) est propre à l'utilisateur 103 du terminal d'encodage 102, 300. En particulier, lorsque l'utilisateur 103 est propriétaire du terminal d'encodage 102, 300, la caractéristique biométrique de référence (CR-Bio) est exclusivement celle dudit utilisateur 103. A titre d'exemple, le terminal d'encodage 102, 300 est un dispositif électronique mobile, tel qu'un téléphone multifonction dont l'utilisateur 103 est seul propriétaire. La caractéristique biométrique de référence (CR-Bio) est alors une caractéristique biométrique de référence (CR-Bio) de l'utilisateur 103.

### Références

### Littérature brevet

US 4109237 A [HILL ROBERT B] 22.08.1978.
WO 9526013 A1 [MINNESOTA MINING & MFG [US]] 28.09.1995.
US 2006/088193 A1 [RETICA SYSTEM INC [US]] 24.07.2006.
US 2008/253622 A1 [RETICA SYSTEM INC [US]] 16.10.2008.
EP 2 813 961 A1 [KONVALINKA IRA [CA]] 17.12.2014.
WO 2017/019972 A1 [VISA INT SERVICE ASS [US]] 02.02.2017.
WO 2017/075063 A1 [VISA INT SERVICE ASS [US]] 04.07.2017.
FR 3069681 A1 [SAFRAN IDENTITY & SECURITY [FR]] 01.02.2019.
WO 2019/078858 A1 [VISA INT SERVICE ASS [US]] 25.04.2019.
WO 2019/094071 A1 [VISA INT SERVICE ASS [US]] 16.05.2019.
WO 2023/028242 A1 [TOOLS FOR HUMANITY CORP [US] 01.03.2023.
WO 2023/028221 A1 [TOOLS FOR HUMANITY CORP [US] 02.03.2023.

### Littérature non-brevet

ISO/IEC 19794-1:2011 Information technology - Biometric data interchange formats - Part 1: Framework.

Barak et al. (2014) "Obfuscation for evasive functions." Theory of Cryptography Conference. Berlin, Heidelberg: Springer Berlin Heidelberg.

Papernot et al. (2016) "Semi-supervised knowledge transfer for deep learning from private training data." arXiv preprint arXiv:1610.05755.

Hasnat et al. (2017) "Deepvisage: Making face recognition simple yet with powerful generalization skills." Proceedings of the IEEE International Conference on Computer Vision Workshops.

Galbraith & Zoberning (2019), "Obfuscated fuzzy hamming distance and conjunctions from subset product problems.", Theory of Cryptography Conference.

South et al. (2024) "Verifiable evaluations of machine learning models using zkSNARKs." arXiv preprint arXiv:2402.02675.

## Revendications

1. Procédé (800, 900, 1000 11000) d'encodage, mise en œuvre par un terminal d'encodage (102, 300), d'un gabarit biométrique (803, 903,1003, 1103) d'épreuve (GE-Bio), ledit procédé prend, en donnée d'entrée, une caractéristique biométrique (801, 901, 1001, 11001) d'épreuve (CE-Bio), et fournit, en donnée de sortie, un gabarit biométrique (803, 903, 1003, 1103) d'épreuve (GE-Bio), dans lequel le gabarit biométrique (803, 903, 1003, 1103) d'épreuve (GE-Bio) est généré à partir de la caractéristique biométrique (801, 901, 1001, 1101) d'épreuve (CE-Bio) selon un schéma (802, 902, 1002, 1102) d'encodage (SE) représentatif de la distance (802a, 902a, 1002a, 11002a), d(CE-Bio, CR-Bio), selon une métrique entre la caractéristique biométrique (801, 901, 1001, 1101) d'épreuve (CE-Bio) et une caractéristique biométrique (802b, 902b, 1002b, 1102b) de référence (CR-Bio).

2. Procédé d'encodage (900) selon la revendication 1, tel que le schéma (902) d'encodage (SE) comprend un pré-encodeur (902e) (P-Enc) configuré pour générer un gabarit biométrique interne (902c) de référence (GIR-Bio) généré à partir de la caractéristique biométrique (902b) de référence (CR-Bio) et un gabarit biométrique intermédiaire (902d) d'épreuve (GEI-Bio) généré à partir de la caractéristique biométrique (901) d'épreuve (CE-Bio), la distance selon une métrique est une distance (902a), d(CE-Bio, CR-Bio) entre le gabarit biométrique interne (902c) de référence (GIR-Bio) et le gabarit biométrique intermédiaire (902b) d'épreuve (GEI-Bio).

3. Procédé d'encodage (1000) selon l'une des revendications 1 à 2, tel que le schéma (1002) d'encodage comprend une fonction (1002f) de transition (F-Trans) ou une fonction de distribution (F-Dist) centrée sur la distance (1002a) d(GEI-Bio, GIR-Bio) selon une métrique entre un gabarit biométrique interne (1002c) de référence (GIR-Bio) généré à partir de la caractéristique biométrique (1002b) de référence (CR-Bio) et un gabarit biométrique intermédiaire (1002b) d'épreuve (GEI-Bio) généré à partir de la caractéristique biométrique (1001) d'épreuve (CE-Bio).

4. Procédé d'encodage (11000) selon l'une quelconque des revendications 1 à 3, tel que le schéma (11002) d'encodage (SE) comprend en outre une fonction (11002g) de génération de bruit (F-Br), de préférence une fonction de génération de bruit prenant, en variable d'entrée, la caractéristique biométrique (11001) d'épreuve (CE-Bio).

5. Procédé d'encodage (11000) selon la revendication 4, tel que la fonction (11002g) de génération de bruit (F-Br) comprend fonction générant un nombre aléatoire à partir de la caractéristique biométrique 1101 d'épreuve (CE-Bio) choisie parmi une fonction de hachage, une fonction de sommation pondérée ou une fonction de réduction.

6. Procédé d'encodage (800, 900, 1000 11000) selon l'une quelconque des revendications 1 à 5, tel que le schéma (802, 902, 1002, 1102) d'encodage (SE) est implémenté sous la forme d'un réseau de neurones préalablement entraîné selon un protocole enseignant-étudiant.

7. Procédé d'encodage (800, 900, 1000 11000) selon l'une quelconque des revendications 1 à 6, tel que le schéma (802, 902, 1002, 1102) d'encodage (SE) est propre au terminal biométrique (102, 300).

8. Procédé d'encodage (800, 900, 1000 11000) selon l'une quelconque des revendications 1 à 6, tel que la caractéristique biométrique (802b, 902b, 1002b, 1102b) de référence (CR-Bio) est propre à l'utilisateur (103) du terminal d'encodage (102, 300).

9. Terminal d'encodage (103, 300) comprenant des moyens pour mettre en œuvre le procédé (800, 900, 1000, 1100) d'encodage selon l'une quelconque des revendications 1 à 8.

10. Terminal d'encodage (103, 300) selon la revendication 9, tel qu'il est un dispositif électronique mobile, de préférence un téléphone mobile multifonction.

11. Procédé d'identification biométrique comprenant les étapes suivantes :
a) Transmettre, par un terminal d'identification biométrique (101, 200), une caractéristique biométrique (402a) d'épreuve (CR-Bio) d'un individu (103) à un terminal d'encodage (102, 300) ;
b) Générer, par le terminal d'encodage (102, 300) un gabarit biométrique (503a) d'épreuve (GR-Bio) à l'aide d'un procédé d'encodage (800, 900, 1000 11000) selon l'une quelconque des revendications 1 à 8 ;
c) Recevoir, par le terminal d'identification biométrique (101, 200), le gabarit biométrique (503a) d'épreuve (GR-Bio) ;
d) Comparer, par le terminal d'identification biométrique (102, 300), le gabarit biométrique (503a) d'épreuve (GE-Bio) avec au moins un gabarit biométrique (405a) de référence (GR-Bio) d'une base (405) de données de gabarits biométriques de référence (GR-Bio).

12. Procédé d'identification selon la revendication 11, tel que l'étape d) de comparaison est exécutée selon un protocole de recherche approximative, de préférence un protocole de recherche approximative fondée sur une distance de Hamming.

13. Procédé d'identification selon l'une quelconque des revendications 11 à 12, tel qu'il comprend en outre une étape de génération, par le terminal d'encodage (102, 200), d'une preuve (601a) d'encodage (PE) du gabarit biométrique (503a) d'épreuve (GE-Bio) à partir de la caractéristique biométrique (402a) d'épreuve (PE), de préférence une preuve d'encodage à divulgation nulle de connaissance, et une étape de vérification, par le terminal d'identification biométrique (101, 200), de la preuve (601a) d'encodage (PE).

14. Procédé selon l'une quelconque des revendications 11 à 13, tel que l'étape (d) de comparaison est exécutée selon une méthode de dissimulation de données et/ou de dissimulation de de fonctions.

15. Système (100) d'identification biométrique comprenant :
- un terminal (101, 200) d'identification biométrique comprenant un dispositif (201) d'acquisition configuré pour acquérir au moins une caractéristique biométrique (402a) d'épreuve (CR-Bio) d'un utilisateur (103);
- un support d'enregistrement (202f) comprenant une base de données BDD) de gabarits biométriques (405a) de référence (GR-Bio) ;
- un terminal d'encodage (102, 300) selon l'une quelconque des revendications 9 à 10 ;
le système étant configuré pour exécuter les étapes d'un procédé d'identification selon l'une quelconque des revendications 11 à 14.

## Patentansprüche

1. Verfahren (800, 900, 1000, 11000) zur Kodierung einer biometrischen Vorlage (803, 903, 1003, 1103) für einen Test (GE-Bio), das von einem Kodierungsendgerät (102, 300) durchgeführt wird, wobei das Verfahren als Eingabedaten ein biometrisches Merkmal (801, 901, 1001, 11001) einer Probe (CE-Bio) entgegennimmt und als Ausgabedaten eine biometrische Vorlage (803, 903, 1003, 1103) des Testdatensatzes (GE-Bio) als Ausgabe liefert, wobei die biometrische Vorlage (803, 903, 1003, 1103) für den Test (GE-Bio) aus dem biometrischen Merkmal (801, 901, 1001, 1101) für den Test (CE-Bio) gemäß einem Schema (802, 902, 1002, 1102) erstellt wird, das den Abstand (802a, 902a, 1002a, 11002a), d(CE-Bio, CR-Bio), gemäß einer Metrik zwischen dem biometrischen Merkmal (801, 901, 1001, 1101) des Testmerkmals (CE-Bio) und eines biometrischen Referenzmerkmals (802b, 902b, 1002b, 1102b) (CR-Bio).

2. Kodierungsverfahren (900) nach Anspruch 1, wobei das Kodierungsschema (902) (SE) einen Vorkodierer (902e) (P-Enc) umfasst, der so konfiguriert ist, dass er eine interne biometrische Referenzvorlage (902c) (GIR-Bio), die aus dem biometrischen Referenzmerkmal (902b) (CR-Bio) erzeugt wird, und eine biometrische Zwischenvorlage (902d) für den Test (GEI-Bio), das aus dem biometrischen Testmerkmal (901) (CE-Bio) erzeugt wird; der Abstand gemäß einer Metrik ist ein Abstand (902a), d(CE-Bio, CR-Bio) zwischen der internen biometrischen Referenzvorlage (902c) (GIR-Bio) und der biometrischen Zwischenvorlage (902b) für den Test (GEI-Bio).

3. Kodierungsverfahren (1000) gemäß einem der Ansprüche 1 bis 2, wobei das Kodierungsschema (1002) eine Funktion (1002f) der Übergang (F-Trans) oder eine Verteilungsfunktion (F-Dist) umfasst, die auf den Abstand (1002a) d(GEI-Bio, GIR-Bio) gemäß einer Metrik zwischen einer internen biometrischen Referenzvorlage (1002c) (GIR-Bio), die aus dem biometrischen eferenzmerkmal (1002b) (CR-Bio) generiert wurde, und einer biometrischen Zwischenvorlage (1002b) für den Test (GEI-Bio), die aus dem biometrischen Merkmal (1001) für den Test (CE-Bio) generiert wurde.

4. Kodierungsverfahren (11000) gemäß einem der Ansprüche 1 bis 3, wobei das Kodierungsschema (11002) (SE) ferner eine Rauschgenerierungsfunktion (11002g) (F-Br) umfasst, vorzugsweise eine Rauschgenerierungsfunktion, die als Eingabevariable das biometrische Merkmal (11001) der Probe (CE-Bio) als Eingabevariable verwendet.

5. Kodierungsverfahren (11000) gemäß Anspruch 4, wobei die Rauschgenerierungsfunktion (11002g) (F-Br) eine Funktion umfasst, die aus dem biometrischen Merkmal 1101 der Probe (CE-Bio) eine Zufallszahl erzeugt, ausgewählt aus einer Hash-Funktion, einer gewichteten Summationsfunktion oder einer Reduktionsfunktion ausgewählt wird.

6. Kodierungsverfahren (800, 900, 1000, 11000) gemäß einem der Ansprüche 1 bis 5, wobei das Schema (802, 902, 1002, 1102) ein Kodierungssystem (SE) in Form eines neuronalen Netzes implementiert ist, das zuvor nach einem Lehrer-Schüler-Protokoll trainiert wurde.

7. Kodierungsverfahren (800, 900, 1000, 11000) gemäß einem der Ansprüche 1 bis 6, wobei das Kodierungsschema (802, 902, 1002, 1102) des Kodierungssystems (SE) für das biometrische Endgerät (102, 300) spezifisch ist.

8. Kodierungsverfahren (800, 900, 1000, 11000) gemäß einem der Ansprüche 1 bis 6, wobei das biometrische Merkmal (802b, 902b, 1002b, 1102b) (CR-Bio) für den Benutzer (103) des Kodierungsterminals (102, 300) spezifisch ist.

9. Kodierungsendgerät (103, 300), das Mittel zur Durchführung des Kodierungsverfahrens (800, 900, 1000, 1100) gemäß einem der Ansprüche 1 bis 8 umfasst.

10. Kodierungsendgerät (103, 300) nach Anspruch 9, wobei es sich um ein mobiles elektronisches Gerät, vorzugsweise ein Multifunktions-Mobiltelefon, handelt.

11. Verfahren zur biometrischen Identifizierung, das die folgenden Schritte umfasst:
a) Übertragen eines biometrischen Merkmals (402a) eines Testdatensatzes (CR-Bio) einer Person (103) von einem biometrischen Identifizierungsendgerät (101, 200) an ein Kodierungsendgerät (102,300);
b) Erzeugen einer biometrischen Testvorlage (503a) (GR-Bio) durch das Kodierungsterminal (102,300) unter Verwendung eines Kodierungsverfahrens (800, 900, 1000, 11000) gemäß einem der Ansprüche 1 bis 8;
c) Empfangen des biometrischen Testmusters (503a) (GR-Bio) durch das biometrische Identifikationsterminal (101, 200);
d) Vergleichen durch das biometrische Identifikationsterminal (102, 300) das biometrische Testmuster (503a) (GE-Bio) mit mindestens einem biometrischen Referenzmuster (405a) (GR-Bio) aus einer Datenbank (405) für biometrische Referenzmuster (GR-Bio) zu vergleichen.

12. Identifizierungsverfahren nach Anspruch 11, wobei der Vergleichsschritt d) gemäß einem Protokoll für die ungefähre Suche, vorzugsweise einem auf dem Hamming-Abstand basierenden Protokoll für die ungefähre Suche, durchgeführt wird.

13. Identifizierungsverfahren nach einem der Ansprüche 11 bis 12, wobei es ferner einen Schritt umfasst, bei dem das Kodierungsendgerät (102, 200) einen Kodierungsnachweis (601a) (PE) für das biometrische Testmuster (503a) (GE-Bio) ausgehend von dem biometrischen Merkmal (402a) des Testmerkmals (PE), vorzugsweise einen Null-Wissens-Kodierungsnachweis, sowie einen Schritt zur Überprüfung des Kodierungsnachweises (601a) (PE) durch das biometrische Identifikationsendgerät (101, 200) umfasst.

14. Verfahren nach einem der Ansprüche 11 bis 13, wobei der Vergleichsschritt (d) nach einem Verfahren zur -Datenverschleierung und/oder Funktionsverschleierung durchgeführt wird.

15. Biometrisches Identifikationssystem (100), umfassend:
- ein biometrisches Identifikationsendgerät (101, 200) mit einer Erfassungsvorrichtung (201), die so konfiguriert ist, dass sie mindestens ein biometrisches Merkmal (402a) einer Probe (CR-Bio) eines Benutzers (103);
- ein Speichermedium (202f) mit einer Datenbank (BDD) für biometrische Referenzvorlagen (405a) (GR-Bio);
- ein Kodierungsendgerät (102, 300) gemäß einem der Ansprüche 9 bis 10; wobei das System so konfiguriert ist, dass es die Schritte eines Identifizierungsverfahrens gemäß einem der Ansprüche 11 bis 14 ausführt.

## Claims

1. A method (800, 900, 1000, 11000) for encoding, implemented by an encoding terminal (102, 300), a biometric template (803, 903, 1003, 1103) of a test sample (GE-Bio), said method takes, as input data, a test biometric characteristic (801, 901, 1001, 11001) (CE-Bio), and provides, as output data, a test biometric template (803, 903, 1003, 1103) for the test (GE-Bio), wherein the biometric template (803, 903, 1003, 1103) (GE-Bio) is generated from the test biometric feature (801, 901, 1001, 1101) (CE-Bio) according to an encoding scheme (802, 902, 1002, 1102) encoding scheme (SE) representative of the distance (802a, 902a, 1002a, 11002a), d(CE-Bio, CR-Bio), according to a metric between the biometric characteristic (801, 901, 1001, 1101) of the test sample (CE-Bio) and a biometric characteristic (802b, 902b, 1002b, 1102b) of the reference sample (CR-Bio).

2. An encoding method (900) according to claim 1, wherein the encoding scheme (902) (SE) comprises a pre-encoder (902e) (P-Enc) configured to generate an internal biometric reference template (902c) (GIR-Bio) derived from the biometric reference feature (902b) (CR-Bio) and an intermediate biometric test template (902d) (GEI-Bio) generated from the test biometric feature (901) (CE-Bio), the metric distance is a distance (902a), d(CE-Bio, CR-Bio) between the internal reference biometric template (902c) (GIR-Bio) and the intermediate test biometric template (902b) (GEI-Bio).

3. An encoding method (1000) according to one of claims 1 to 2, such that the encoding scheme (1002) comprises a transition function (F-Trans) (1002f) or a distribution function (F-Dist) centred on the distance (1002a) d(GEI-Bio, GIR-Bio) according to a metric between an internal biometric reference template (1002c) (GIR-Bio) generated from the biometric reference feature (1002b) (CR-Bio) and an intermediate biometric template (1002b) (GEI-Bio) generated from the test biometric characteristic (1001) (CE-Bio).

4. An encoding method (11000) according to any one of claims 1 to 3, such that the encoding scheme (11002) (SE) further comprises a noise generation function (11002g) (F-Br), preferably a noise generation function taking, as an input variable, the biometric characteristic (11001) of the test (CE-Bio).

5. An encoding method (11000) according to claim 4, such that the noise generation function (11002g) (F-Br) comprises a function generating a random number from the test biometric characteristic (CE-Bio) 1101, selected from a hash function, a weighted summation function or a reduction function.

6. An encoding method (800, 900, 1000, 11000) according to any one of claims 1 to 5, such that the flowchart (802, 902, 1002, 1102) encoding engine (SE) is implemented in the form of a neural network pre-trained according to a teacher-student protocol.

7. An encoding method (800, 900, 1000, 11000) according to any one of claims 1 to 6, such that the encoding scheme (802, 902, 1002, 1102) encoding scheme (SE) is specific to the biometric terminal (102, 300).

8. An encoding method (800, 900, 1000, 11000) according to any one of claims 1 to 6, such that the biometric characteristic (802b, 902b, 1002b, 1102b) (CR-Bio) is specific to the user (103) of the encoding terminal (102, 300).

9. An encoding terminal (103, 300) comprising means for implementing the encoding method (800, 900, 1000, 1100) according to any one of claims 1 to 8.

10. An encoding terminal (103, 300) according to claim 9, wherein it is a mobile electronic device, preferably a multifunctional mobile telephone.

11. A biometric identification method comprising the following steps:
a) Transmitting, via a biometric identification terminal (101, 200), a biometric characteristic (402a) of a test sample (CR-Bio) from an individual (103) to an encoding terminal (102, 300);
b) Generating, via the encoding terminal (102, 300), a biometric template (503a) for a test (GR-Bio) using an encoding process (800, 900, 1000, 11000) in accordance with any one of claims 1 to 8;
c) Receiving, via the biometric identification terminal (101, 200), the test biometric template (503a) (GR-Bio);
d) Comparing, via the biometric identification terminal (102, 300), the test biometric template (503a) (GE-Bio) with at least one reference biometric template (405a) (GR-Bio) from a database (405) of reference biometric templates (GR-Bio).

12. An identification method according to claim 11, wherein step d) of comparison is carried out in accordance with a fuzzy search protocol, preferably a Hamming distance-based fuzzy search protocol.

13. A method of identification according to any one of claims 11 to 12, such that it further comprises a step of generating, by the encoding terminal (102, 200), an encoding proof (601a) (PE) of the test biometric template (503a) (GE-Bio) from the test biometric feature (402a) (PE), preferably a zero-knowledge proof of encoding, and a step of verifying, by the biometric identification terminal (101, 200), the proof (601a) of encoding (PE).

14. A method according to any one of claims 11 to 13, such that step (d) of comparison is performed using a method of data obfuscation and/or function obfuscation.

15. A biometric identification system (100) comprising:
- a biometric identification terminal (101, 200) comprising an acquisition device (201) configured to acquire at least one biometric feature (402a) from a sample (CR-Bio) of a user (103);
- a storage medium (202f) comprising a database (BDD) of reference biometric templates (405a) (GR-Bio);
- an encoding terminal (102, 300) according to any one of claims 9 to 10;
the system being configured to perform the steps of an identification method according to any one of claims 11 to 14.
